(19) Europäisches Patentamt
European Patent Office
Office européen des brevets

(11) EP 1 796 896 B1

(12) **EUROPEAN PATENT SPECIFICATION**

(45) Date of publication and mention of the grant of the patent:
**24.03.2010 Bulletin 2010/12**

(21) Application number: **05788447.0**

(22) Date of filing: **29.09.2005**

(51) Int Cl.:
***B29D 11/00** (2006.01)* ***G02C 7/04** (2006.01)*
***C09D 11/10** (2006.01)* ***B29C 37/00** (2006.01)*

(86) International application number:
**PCT/EP2005/010537**

(87) International publication number:
**WO 2006/034863 (06.04.2006 Gazette 2006/14)**

(54) **PAD PRINTING METHOD FOR MAKING COLORED CONTACT LENSES**

TAMPONDRUCKVERFAHREN ZUR HERSTELLUNG FARBIGER KONTAKTLINSEN

PROCEDE DE TAMPONGRAPHIE PERMETTANT DE FABRIQUER DES VERRES DE CONTACT COLORES

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.09.2004 US 614690 P**

(43) Date of publication of application:
**20.06.2007 Bulletin 2007/25**

(73) Proprietor: **Novartis AG**
**4056 Basel (CH)**

(72) Inventors:
- **TUCKER, Robert, Carey**
**Suwanee, GA 30024 (US)**
- **CORTI, Sandra**
**Suwanee, GA 30024 (US)**
- **QUINN, Michael, Hugh**
**Suwanee, GA 30024 (US)**
- **ATKINS, Barry, L.**
**Chicago, Il 60646 (US)**

(74) Representative: **Bohest AG**
**Postfach 160**
**4003 Basel (CH)**

(56) References cited:
**WO-A-03/040242** **WO-A-2004/022659**
**US-A1- 2003 119 943** **US-A1- 2004 044 099**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 796 896 B1

## Description

The present invention generally relates to a method for making colored contact lenses. More specifically, the present invention relates to a pad-printing method for making colored hydrogel contact lenses with good image quality.

For cosmetic purposes, contact lenses having one or more colorants dispersed in the lens or printed on the lens are in high demand. These colored contact lenses enhance the natural beauty of the eye, or provide unique patterns on the iris of the wearer, or provide non cosmetic patterns or marks, such as rotation marks, inversion marks, product/brand codes, lot numbers, "DEMO" lenses, and the like, which are of benefits to wearers, eye-care practitioners and manufacturers.

Presently, pad printing has been used commercially for making colored contact lenses. A typical example of this printing follows. An image is etched into metal to form a cliché. The cliché is placed in a printer. Once in the printer, the cliché is inked with an ink by either an open inkwell doctoring system or by a closed ink cup sliding across the image. Then, a transfer-pad (also called a "tampon"), made of a material comprising silicone that can vary in elasticity, picks up the inked image from the cliché and transfers the image to a contact lens or a mold for making a contact lens. One of critical steps in the process involves accurately picking up the inked image from the cliché and not altering the design patterns of the image while laying on the pad prior to transfer the inked image to the contact lens.

A number of inks are known in the art for cliché ink transfer printing of color images on a contact lens. Examples of such inks include those disclosed in the following patents or patent applications US 4668240, US 4857072, US 5272010, US 5414477 and US 2003/0054109. WO-A- 2004/022659 discloses methods for making colour contact lenses and inks used therein. The above inks are substantially similar in that they all are organic solvent-based inks which can effectively wet well the surface of a hydrophobic silicone pad. Advantages of using organic solvent-based ink in a pad printing process are that an inked image can be easily picked up by a silicone pad from a cliché and that the design patterns of the inked image will not be altered while laying on the pad prior to transfer the inked image to the contact lens.

It would be desirable to use water-based ink in pad transfer printing since the water-based ink contains less volatile organic compounds and is more environmentally desirable. However, unlike an organic solvent-based ink, a water-based ink inherently has a high surface tension and poor wetability on a hydrophobic silicone pad. As such, it may be more difficult for a silicone pad to completely pick up an inked image from a cliché, and ink drops in the inked image may pool on a silicone pad, causing a loss of image quality and resolution. Therefore, there exists a need for methods for producing a high-quality color image on a contact lens using a pad-printing system with water-based inks.

The invention provides a method for making colored contact lenses, comprising the steps of:

(a) obtaining a water-based ink,
the ink having a viscosity of greater than 100 mPa·s (centipoise (cps)) and
the ink comprising water, at least one colorant, a water-soluble binder polymer having ethylenically unsaturated groups, an initiator, and a surfactant,
wherein the surfactant is present in the ink in an amount sufficient to provide the ink a dynamic surface tension of less than 40 mN/m at surface age of 1 second;

(b) applying the ink, by using pad transfer printing technique, to at least a portion of at least one of molding surfaces of a lens mold to form a colored coat;

(c) actinically or thermally curing the ink printed on the mold to form a colored film, wherein the printed ink is cured to an extent so that no noticeable color smearing is observed by examination with naked eyes;

(d) dispensing a lens-forming material into the lens-forming cavity of the mold; and

(e) actinically or thermally curing the lens-forming material within the lens-forming cavity to form a colored contact lens, whereby the colored film detaches from the molding surface and becomes integral with the body of the contact lens, wherein the colored film becomes part of one of the anterior and posterior surface of the colored contact lens and has a good adhesion to the lens.

BRIEF DESCRIPTION OF THE DRAWING

**Figures 1a** and **1b** illustrate the images of black inks picked up by a conical silicone pad from a cliché.

**Figure 1a** is a black ink comprising no surfactant, with the colored image being distorted or lost due to pooling of

ink drops. **Figure 1b** is a black ink comprising 0.15% Surfynol® 420 surfactant with the pattern and resolution of the colored image being preserved.

**Figure 2** illustrates non-equilibrium surface tensions of two inks (1558-88-1 and 1558-85-3) as function of time, as determined by the pendant drop technique.

A "contact lens" refers to a structure that can be placed on or within a wearer's eye. A contact lens can correct, improve, or alter a user's eyesight, but that need not be the case. A contact lens can be of any appropriate material, and in particular can be a soft lens, a hard lens, or a hybrid lens. A contact lens can be in a dry state or a wet state. "Dry State" refers to a soft lens in a state prior to hydration or the state of a hard lens under storage or use conditions. "Wet State" refers to a soft lens in a hydrated state.

The "front or anterior surface" of a contact lens, as used herein, refers to the surface of the lens that faces away from the eye during wear. The anterior surface, which is typically substantially convex, may also be referred to as the front curve of the lens.

The "rear or posterior surface" of a contact lens, as used herein, refers to the surface of the lens that faces towards the eye during wear. The rear surface, which is typically substantially concave, may also be referred to as the base curve of the lens.

A "colored contact lens" refers to a contact lens (hard or soft) having a color image printed thereon. A color image can be a cosmetic pattern, for example, iris-like patterns, Wild Eye™ patterns, made-to-order (MTO) patterns, and the like; an inversion mark that allows a user to handle and insert easily a contact lens; a toric rotation mark, or contact lenses stock keeping units (SKUs), for example, either in forms of numbers or as bar codes. A color image can be a single color image or a multi-color image. A color image is preferably a digital image, but it can also be an analog image.

A colored contact lens can be produced by printing a high-quality color image directly on a contact lens using methods and systems of the invention. A contact lens can be clear before it is printed upon. Alternatively, a contact lens can be tinted prior to being printed upon. That is, a colorant may have been added to that lens using methods that are well known in the art before that lens is printed upon using a printing method of the invention.

A "colored coat" refers to a coating on an object and having a color image printed therein.

"Colorant" means either a dye or a pigment or a mixture thereof that is used to print a color image on an article.

"Dye" means a substance that is soluble in a solvent and that is used to impart color. Dyes are typically translucent and absorb but do not scatter light. Dyes can cover both optical regions of contact lenses and non-optical regions of contact lenses.

A "pigment" means a powdered substance (particles) that is suspended in a liquid in which it is insoluble. Pigments are used to impart color. Pigments, in general, are more opaque than dyes.

"A binder polymer" refers to a crosslinkable polymer that can be crosslinked by a crosslinker or upon initiation by a chemical or physical means (e.g., moisture, heating, UV irradiation or the like) to trap or bind colorants onto or into a contact lens.

The term "ethylenically unsaturated group" or "olefinically unsaturated group" is employed herein in a broad sense and is intended to encompass any groups containing at least one >C=C< group. Exemplary ethylenically unsaturated groups include without limitation acryloyl, methacryloyl, allyl, vinyl or styrenyl groups.

A "hydrogel" refers to a polymeric material which can absorb at least 10 percent by weight of water when it is fully hydrated. Generally, a hydrogel material is obtained by polymerization or copolymerization of at least one hydrophilic monomer, optionally in the presence of additional monomers and/or macromers.

A "HEMA-based hydrogel" refers to a hydrogel obtained by copolymerization of a polymerizable composition comprising HEMA (hydroxyethyl methacrylate).

A "silicone-based hydrogel" refers to a hydrogel obtained by copolymerization of at least one silicone-containing monomer or at least one silicone-containing macromer.

"Hydrophilic," as used herein, describes a material or portion thereof that will more readily associate with water than with lipids.

"Ophthalmically compatible", as used herein, refers to a material or surface of a material which may be in intimate contact with the ocular environment for an extended period of time without significantly damaging the ocular environment and without significant user discomfort. "Ocular environment", as used herein, refers to ocular fluids (e.g., tear fluid) and ocular tissue (e.g., the cornea) and/or conjunctiva which may come into intimate contact with a contact lens.

A "lens-forming material" refers to a polymerizable composition which can be cured (i.e., polymerized and/or crosslinked) thermally or actinically to obtain a crosslinked polymer. As used herein, "actinically" in reference to curing or polymerizing of a polymerizable composition or material or a lens-forming material means that the curing (e.g., crosslinking and/or polymerizing) is performed by actinic irradiation, such as, for example, UV irradiation, ionized radiation (e.g. gamma ray or X-ray irradiation), microwave irradiation, and the like. Thermal curing or actinic curing methods are well-known to a person skilled in the art. Lens-forming materials are well known to a person skilled in the art.

A "prepolymer" refers to a starting polymer which can be cured (e.g., crosslinked and/or polymerized) actinically or thermally or chemically to obtain a crosslinked and/or polymerized polymer having a molecular weight much higher than the starting polymer. A "crosslinkable prepolymer" refers to a starting polymer which can be crosslinked upon actinic radiation to obtain a crosslinked polymer having a molecular weight much higher than the starting polymer.

A "monomer" means a low molecular weight compound that can be polymerized. Low molecular weight typically means average molecular weights less than 700 Daltons.

A "vinylic monomer", as used herein, refers to a low molecular weight compound that has an ethylenically unsaturated vinyl group and can be polymerized actinically or thermally. Low molecular weight typically means average molecular weights less than 700 Daltons.

A "macromer" refers to a medium and high molecular weight compound or polymer that contains functional groups capable of undergoing further polymerizing/crosslinking reactions. Medium and high molecular weight typically means average molecular weights greater than 700 Daltons. Preferably, a macromer contains ethylenically unsaturated groups and can be polymerized actinically or thermally.

A "polymer" means a material formed by polymerizing/crosslinking one or more monomers.

A "photoinitiator" refers to a chemical that initiates radical crosslinking/polymerizing reaction by the use of light. Suitable photoinitiators include, benzoin methyl ether, diethoxyacetophenone, a benzoyl phosphine oxide, 1-hydroxycyclohexyl phenyl ketone, Darocure® type, and Irgacure® type photoinitiators (commercially available from Ciba Speciality Chemicals, Switzerland).

A "thermal initiator" refers to a chemical that initiates radical crosslinking/polymerizing reaction by the use of heat energy. Examples of suitable thermal initiators include 2,2'-azobis (2,4-dimethylpentanen itrile), 2,2'-azobis (2-methylpropanenitrile), 2,2'-azobis (2-methylbutanenitrile), peroxides such as benzoyl peroxide, and the like. Preferably, the thermal initiator is 2,2'-azobis(isobutyronitrile) (AIBN).

A "good adhesion to a contact lens" in reference to a colored coat or film or an ink means that the colored coat or film (with a color image) generated on the lens with the ink can pass a sterilization-surviving test and at least a finger rubbing test, preferably further pass a sonication-in-methanol (or other suitable solvent, e.g., such as isopropanol) surviving test.

The finger rubbing test is performed by removing the hydrated contact lens from a packaging solution, e.g., saline, and digitally rubbing the lens between either two fingers or a finger and a palm for up to about 10 seconds. Visible and microscopic (~10X) observation of colorant bleeding, smearing, or delaminating indicates failure of the rub test.

The sonication-in-methanol (or other suitable solvent, e.g., such as isopropanol) test is performed as follows. A colored contact lens is immersed in 5 ml of, for example, methanol or isopropanol or a suitable solvent, sonicated for about 1 minute and then placed in a vial containing borate buffered saline (BBS). After about 10 seconds, the saline is drained and about 5 ml of fresh BBS is added. After equilibrating for about 5 minutes in the BBS, the lens is inspected for signs of adhesion failure (e.g., colorant bleeding, smearing, or delaminating).

"Passing a sterilization-surviving test" means that no significant decoloring or delaminating or the like can be observed after sterilization. Production of contact lenses always involve a step of sterilization, such as autoclave, or irradiation with UV light, x-ray, or the like. For example, an autoclave-surviving test can be performed by removing a sterilized contact lens from a packaging solution, e.g., saline, and immersing it into a vial of methanol. The vial containing the hydrated contact lens and methanol is sonicated for 30 seconds using a standard laboratory sonicator. The lens is then removed from the methanol and placed back into the packaging solution. A finger rubbing test is performed on this lens. Observation of bleeding, smearing, or delaminating indicates failure of this test.

"Surface age" as used herein refers to the amount of time which is allowed for surfactant molecules in a water-based ink to migrate (diffuse) to any newly formed interface (ink/air) during a dynamic (non-equilibrium) surface tension measuring process.

The term "surfactant," as used herein, refers to a surface-active compound.

A "spatial limitation of actinic radiation" refers to an act or process in which energy radiation in the form of rays is directed by mea ns of, for example, a mask or screen or combinations thereof, to impinge, in a spatially restricted manner, onto an area having a well defined peripheral boundary. For example, a spatial limitation of UV radiation can be achieved by using a mask or screen which has a transparent or open region (unmasked region) surrounded by a UV impermeable region (masked region), as schematically illustrated in Figures 1-9 of US 6627124. The unmasked region has a well defined peripheral boundary with the unmasked region.

The invention provides a method for producing colored contact lenses with relatively high quality color images. The method of the invention comprises the steps of: (a) obtaining a water based ink having a viscosity of greater than about 100 mPa·s (centipoise (cps)) and comprising water, at least one colorant, a water-soluble binder polymer having ethylenically unsaturated groups, an initiator, and a surfactant, wherein the surfactant is present in an amount sufficient to provide the ink a dynamic surface tension of less than 40 mN/m at surface age of 1 second; (b) applying the ink, by usi ng pad transfer printing technique, to at least a portion of at least one of molding surfaces of a lens mold to form a colored coat; (c) actinically or thermally curing the ink printed on the mold to form a colored film, wherein the printed ink

is cured to an extent so that no noticeable color smearing is observed by examination with naked eyes; (d) dispensing a lens-forming material into the lens-forming cavity of the mold; and (e) actinically or thermally curing the lens-forming material within the lens-forming cavity to form a colored contact lens, whereby the colored film detaches from the molding surface and becomes integral with the body of the contact lens, wherein the colored film becomes part of one of the anterior and posterior surface of the colored contact lens and has a good adhesion to the lens.

In a preferred method according to the invention the mold has a first mold half with a first molding surface and a second mold half with a second molding surface, wherein said first and second mold halves are configured to receive each other such that the cavity is formed between said first and second molding surfaces, wherein the step (e) is performed under a spatial limitation of actinic radiation to form the contact lens having a first surface, an opposite second surface and an edge, wherein the first surface is defined by the first molding surface, the second surface is defined by the second molding surface, and the edge is defined by the spatial limitation of actinic irradiation.

In accordance with the invention, a water-based ink is an ink in which the solvent is water. The ink may also (but preferably does not) comprise an organic solvent in addition to water. Any known suitable organic solvents can be used, so long as they do not precipitate the binder polymer, or adversely affect the stability of the colorant. Organic solvents include alcohols (e.g., methanol, ethanol, propanol, isopropanol, cyclohexanol, 1-butanol etc.), glycols (e.g. ethylene glycol, ethylene glycol monoethyl ether, ethylene glycol monobutyl ether, ethylene glycol monomethyl ether, diethylene glycol, propylene glycol, etc.), ketones (e.g. acetone, cyclopentanone, cyclohexanone, acetophenone, diacetone alcohol, methyl ethyl ketone, methyl isobutyl ketone), esters (butyl acetate, ethyl acetate , gamma-butyrolactone, etc.), tetrahydrofuran, methyl-2-pyrrolidone, dimethyl formamide, dimethyl sulfoxide, isophorone, propylene carbonate, 1,4-dioxane, nitromethane, ethanolamine, acetonitrile, acetic acid, formaldhehyde and formamide.

In accordance with the present invention, a binder polymer preferably is a water-soluble, actinically cureable prepolymer which is one of polymerizable components in a lens-forming material for making colored contact lenses. It is understood that a binder polymer can be an actinically crosslinkable prepolymer which is soluble in a mixture of water with one or more organic solvents.

Examples of preferred actinically cureable prepolymers include a water-soluble crosslinkable poly(vinyl alcohol) prepolymer e.g. as described in US 5583163 and US 6303687; a water-soluble vinyl group-terminated polyurethane which for example is obtained by reacting an isocyanate-capped polyurethane with an ethylenically unsaturated amine (primary or secondary amine) or an ethylenically unsaturated monohydroxy compound, wherein the isocyanate-capped polyurethane can be a copolymerization product of at least one polyalkylene glycol, a compound containing at least 2 hydroxyl groups, and at least one compound with two or more isocyanate groups; derivatives of a polyvinyl alcohol, polyethyleneimine or polyvinylamine, which are for example disclosed in US 5849841; a water-soluble crosslinkable polyurea prepolymer e.g. as described in US 6479587; crosslinkable polyacrylamide; crosslinkable statistical copolymers of vinyl lactam, methylmetacrylate and a comonomer, which are for example disclosed in EP0655470 and US 5712356; crosslinkable copolymers of vinyl lactam, vinyl acetate and vinyl alcohol, which are for example disclosed in EP0712867 and US 5665840; polyether-polyester copolymers with crosslinkable side chains which are for example disclosed in EP0932635; branched polyalkylene glycol-urethane prepolymers e.g. as disclosed in EP0958315 and US 6165408; polyalkylene glycol-tetra(meth)acrylate prepolymers e.g. as disclosed in EP0961941 and US 6221303; and crosslinkable polyallylamine gluconolactone prepolymers e.g. as disclosed in WO-A-2000/031150.

In a preferred embodiment, a binder polymer is a water-soluble crosslinkable poly(vinyl alcohol) prepolymer. More preferably, a water-soluble crosslinkable poly(vinyl alcohol) prepolymer is a polyhydroxyl compound as described in US 5583163 and US 6303687 and has a molecular weight of at least about 2000 and which comprises from about 0.5 to about 80%, based on the number of hydroxyl groups in the poly(vinyl alcohol), of units of the formula I, I and II, I and III, or I and II and III

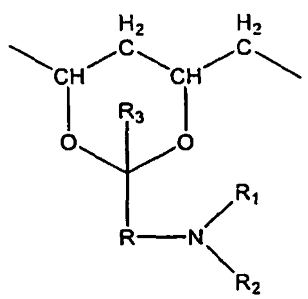

I

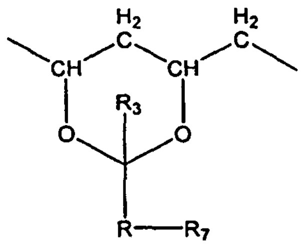

II

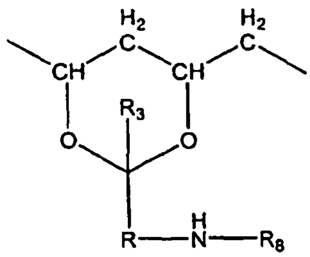

III

In formula I, II and III, the molecular weight refers to a weight average molecular weight, Mw, determined by gel permeation chromatography.

In formula I, II and III, $R_3$ is hydrogen, a $C_1$-$C_6$ alkyl group or a cycloalkyl group.

In formula I, II and III, R is alkylene having up to 12 carbon atoms, preferably up to 8 carbon atoms, and can be linear or branched. Suitable examples include octylene, hexylene, pentylene, butylene, propylene, ethylene, methylene, 2-propylene, 2-butylene and 3-pentylene. Lower alkylene R preferably has up to 6, particularly preferably up to 4 carbon atoms. Methylene and butylene are particularly preferred.

In the formula I, $R_1$ is hydrogen or lower alkyl having up to seven, in particular up to four, carbon atoms. Most preferably, $R_1$ is hydrogen.

In the formula I, $R_2$ is an olefinically unsaturated, electron-withdrawing, crosslinkable radical, preferably having up to 25 carbon atoms. In one embodiment, $R_2$ is an olefinically unsaturated acyl radical of the formula $R_4$ -CO-, in which $R_4$ is an olefinically unsaturated, crosslinkable radical having 2 to 24 carbon atoms, preferably having 2 to 8 carbon atoms, particularly preferably having 2 to 4 carbon atoms.

The olefinically unsaturated, crosslinkable radical $R_4$ having 2 to 24 carbon atoms is preferably alkenyl having 2 to 24 carbon atoms, in particular alkenyl having 2 to 8 carbon atoms, particularly preferably alkenyl having 2 to 4 carbon atoms, for example ethenyl, 2-propenyl, 3-propenyl, 2-butenyl, hexenyl, octenyl or dodecenyl. Ethenyl and 2-propenyl are preferred, so that the -CO-$R_4$ group is the acyl radical of acrylic acid or methacrylic acid.

In the formula II, $R_7$ is a primary, secondary or tertiary amino group or a quaternary amino group of the formula $N^+(R')_3X^-$, in which each R', independently of the others, is hydrogen or a $C_1$ -$C_4$ alkyl radical and X is a counterion, for example $HSO_4^-$, F, $Cl^-$, $Br^-$, $I^-$, $CH_3$ $COO^-$, $OH^-$, $BF^-$, or $H_2PO_4^-$. The radicals $R_7$ are, in particular, amino, mono- or di (lower alkyl)amino, mono- or diphenylamino, (lower alkyl)phenylamino or tertiary amino incorporated into a heterocyclic ring, for example $-NH_2$, $-NH-CH_3$, $-N(CH_3)_2$, $-NH(C_2H_5)$, $-N(C_2H_5)_2$, -NH(phenyl), - $N(C_2H_5)$phenyl or

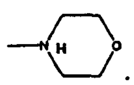

In the formula III, $R_8$ is the radical of a monobasic, dibasic or tribasic, saturated or unsaturated, aliphatic or aromatic organic acid or sulfonic acid. Preferred radicals $R_8$ are derived, for example, from chloroacetic acid, succinic acid, glutaric acid, adipic acid, pimelic acid, maleic acid, fumaric acid, itaconic acid, citraconic acid, acrylic acid, methacrylic acid, phthalic acid and trimellitic acid.

For the purposes of this invention, the term "lower" in connection with radicals and compounds denotes, unless defined otherwise, radicals or compounds having up to 7 carbon atoms, preferably having up to 4 carbon atoms.

"Lower alkyl" has, in particular, up to 7 carbon atoms, preferably up to 4 carbon atoms, and is, for example,

methyl, ethyl, propyl, butyl or tert-butyl.

"Lower alkoxy" has, in particular, up to 7 carbon atoms, preferably up to 4 carbon atoms, and is, for example, methoxy, ethoxy, propoxy, butoxy ortert-butoxy.

In the formula $N^+(R')_3X^-$, R' is preferably hydrogen or $C_1$ -$C_3$ alkyl, and X is halide, acetate or phosphite, for example $-N^+(C_2H_5)_3CH_3COO^-$, $-N^+(C_2H_5)_3Cl^-$, and $-N^+(C_2H_5)_3H_2PO_4^-$.

A water-soluble crosslinkable poly(vinyl alcohol) according to the invention is more preferably a polyhydroxyl compound which has a molecular weight of at least about 2000 and which comprises from about 0.5 to about 80%, preferably from 1 to 50%, more preferably from 1 to 25%, even more preferably from 2 to 15%, based on the number of hydroxyl groups in the poly(vinyl alcohol), of units of the formula I, wherein R is lower alkylene having up to 6 carbon atoms, $R_1$ is hydrogen or lower alkyl, $R_3$ is hydrogen, and $R_2$ is a radical of formula (V). Where p is zero, $R_4$ is preferably $C_2$ - $C_8$ alkenyl. Where p is one and q is zero, $R_6$ is preferably $C_2$ - $C_6$ alkylene and $R_4$ is preferably $C_2$ - $C_8$ alkenyl. Where both p and q are one, $R_5$ is preferably $C_2$ - $C_6$ alkylene, phenylene, unsubstituted or lower alkyl-substituted cyclohexylene or cyclo hexylene-lower alkylene, unsubstituted or lower alkyl-substituted phenylene-lower alkylene, lower alkylene-phenylene, or phenylene-lower alkylene-phenylene, $R_6$ is preferably $C_2$ - $C_6$ alkylene, and $R_4$ is preferably $C_2$ - $C_8$ alkenyl.

Crosslinkable poly(vinyl alcohol)s comprising units of the formula I, I and II, I and III, or I and II and III can be prepared according to US 5583163 and US 6303687.

In another preferred embodiment, a binder polymer is s a crosslinkable polyurea prepolymer of formula (1)

$$CP\text{-}(Q)_q \qquad (1)$$

wherein q is an integer of ≥3, Q is an organic radical that comprises at least one crosslinkable group, CP is a multivalent branched copolymer fragment comprising segments A and U and optionally segments B and T,
wherein: A is a bivalent radical of formula

$$-NR_A\text{-}\ A_1\text{-}NR_A'\text{-} \qquad (2),$$

wherein $A_1$ is the bivalent radical of $-(R_{11}\text{-}O)_n\text{-}(R_{12}\text{-}O)_m\text{-}(R_{13}\text{-}O)_p\text{-}$, a linear or branched $C_2$-$C_{24}$ aliphatic bivalent radical, a $C_5$-$C_{24}$ cycloaliphatic or aliphatic-cycloaliphatic bivalent radical, or a $C_6$-$C_{24}$ aromatic or araliphatic bivalent radical, $R_{11}$, $R_{12}$, $R_{13}$, independently of one other, are each linear or branched $C_2$-$C_4$-alkylene or hydroxy-substituted $C_2$-$C_8$ alkylene radical, n, m and p, independently of one another, are each a number from 0 to 100, provided that the sum of (n+m+p) is 5 to 1000, and $R_A$ and $R_A$ independently of each other is hydrogen, an unsubstituted $C_1$-$C_6$alkyl, a substituted $C_1$-$C_6$alkyl, or a direct, ring-forming bond;
T is a bivalent radical of formula

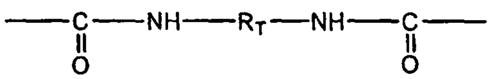

(3),

wherein $R_T$ is a bivalent aliphatic, cycloaliphatic, aliphatic-cycloaliphatic, aromatic, araliphatic or aliphatic-heterocyclic radical;
U is a trivalent radical of formula

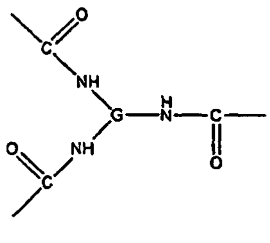

(4),

wherein G is a linear or branched $C_3$-$C_{24}$ aliphatic trivalent radical, a $C_5$-$C_{45}$ cycloaliphatic or aliphatic-cycloaliphatic trivalent radical, or a $C_3$-$C_{24}$ aromatic or araliphatic trivalent radical;

B is a radical of formula

$$-NR_B- B_1-NR_B'- \qquad (5),$$

wherein $R_B$ and $R_B'$ independently of each other is hydrogen, an unsubstituted $C_1$-$C_6$alkyl, a substituted $C_1$-$C_6$alkyl, or a direct, ring-forming bond, $B_1$ is a bivalent aliphatic, cycloaliphatic, aliphatic-cycloaliphatic, aromatic or araliphatic hydrocarbon radical that has at least one primary or secondary amine group or is interrupted by at least one amine group $-NR_m$ in which $R_m$ is hydrogen, a radical Q mentioned above or a radical of formula

$$Q-CP'- \qquad (6),$$

wherein Q is as defined above, and CP' is a bivalent copolymer fragment comprising at least two of the above-mentioned segments A, B, T and U; provided that in the copolymer fragments CP and CP' a segment A or B is followed by a segment T or U in each case; provided that in the copolymer fragments CP and CP' a segment T or U is followed by a segment A or B in each case; provided that the radical Q in formulae (1) and (6) is bonded to a segment A or B in each case; and provided that the N atom of $-NR_m$ is bonded to a segment T or U when $R_m$ is a radical of formula (6).

A crosslinkable prepolymer of formula (1) is obtained by introducing ethylenically unsaturated groups into an amine- or isocyanate-capped polyurea, which preferably is a copolymerization product of a mixture comprising (a) at least one poly(oxyalkylene)diamine, (b) at least one organic poly-amine, (c) optionally at least one diisocyanate, and (d) at least one polyisocyanate. More preferably, the amine- or isocyanate-capped polyurea is a copolymerization product of a mixture comprising (a) at least one poly(oxyalkylene)diamine, (b) at least one organic di- or poly-amine (preferably triamine), (c) at least one diisocyanate, and (d) at least one polyisocyanate (preferably triisocyanate).

Examples of preferred poly(oxyalkylene)diamine include so-called Jeffamines® having an average molecular weight of from 200 to 5000.

Diisocyanate can be a linear or branched $C_3$-$C_{24}$ aliphatic diisocyanate, a $C_5$-$C_{24}$ cycloaliphatic or aliphatic-cycloaliphatic diisocyanate, or a $C_6$-$C_{24}$ aromatic or araliphatic diisocyanate. Examples of especially preferred diisocyanates are isophorone diisocyanate (IPDI), 4,4'-methylenebis(cyclohexyl isocyanate), toluylene-2,4-diisocyanate (TDI), 1,6-diisocyanato-2,2,4-trimethyl-n-hexane (TMDI), methylenebis(cyclohexyl-4-isocyanate), methylenebis(phenyl-isocyanate) or hexamethylene-diisocyanate (HMDI).

An organic diamine can be a linear or branched $C_2$-$C_{24}$ aliphatic diamine, a $C_5$-$C_{24}$ cycloaliphatic or aliphatic-cycloaliphatic diamine, or a $C_6$-$C_{24}$ aromatic or araliphatic diamine. A preferred organic diamine is bis(hydroxyethylene) ethylenediamine (BHEEDA).

Examples of preferred polyamines are symmetrical or asymmetrical dialkylenetriamines or trialkylenetetramines. Preferred polyamines include without limitation diethylenetriamine, N-2'-aminoethyl-1,3-propylenediamine, N, N-bis(3-aminopropyl)-amine, N,N-bis(6-aminohexyl)amine and triethylenetetramine.

A polyisocyanate can be a linear or branched $C_3$-$C_{24}$ aliphatic polyisocyanate, a $C_5$-$C_{45}$ cycloaliphatic or aliphatic-cycloaliphatic polyisocyanate, or a $C_6$-$C_{24}$ aromatic or araliphatic polyisocyanate. Preferably, a polyisocyanate is a $C_6$-$C_{45}$ cycloaliphatic or aliphatic-cycloaliphatic compound containing 3-6 isocyanate groups and at least one heteroatom selected from the group consisting of oxygen and nitrogen.

More preferably, a polyisocyanate is a compound having a group of formula (7):

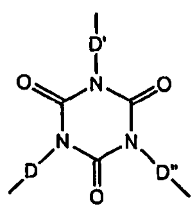

(7)

wherein D, D' and D" independent of one another are a linear or branched divalent $C_1$-$C_{12}$ alkyl radical, a divalent $C_5$-$C_{14}$ alkylcycloalkyl radical. Examples of preferred triisocyanates include without limitation the isocyanurate trimer of hexamethylene diisocyanate, 2,4,6-toluene triisocyanate, p, p', p"-triphenylmethane triisocyanate, and the trifunctional trimer (isocyanurate) of isophorone diisocyanate.

It is advantageous that the amine- or isocyanate-capped polyurea is an amine-capped polyurea which may allow the second step reaction to be carried out in an aqueous medium.

A crosslinkable polyurea prepolymer of the invention can be prepared in a two-step process. In the first step, an amine- or isocyanate-capped polyurea of the invention is prepared by reacting together a mixture comprising (a) at

least one poly(oxyalkylene)diamine, (b) at least one organic di- or poly-amine, (c) at least one diisocyanate, and (d) at least one polyisocyanate. In the second step, a multifunctional compound having at least one ethylenically unsaturated group and a function group coreactive with the capping amine or isocyanate groups of the amine- or isocyanate-capped polyurea obtained in the first step. The first step reaction is advantageously carried out in an aqueous or aqueous-organic medium or organic solvent (e.g, ethyllactate, THF, isopropanol, or the like). A suitable medium has been found to be especially a mixture of water and a readily water-soluble organic solvent, e.g. an alkanol, such as methanol, ethanol or isopropanol, a cyclic ether, such as tetrahydrofuran (THF), or a ketone, such as acetone. An especially suitable reaction medium is a mixture of water and a readily water-soluble solvent having a boiling point of from 50 to 85°C, preferably from 50 to 70°C, especially a water/tetrahydrofuran or a water/acetone mixture.

The reaction temperature in the first reaction step of the process is, for example, from -20 to 85°C, preferably from -10 to 50°C and most preferably from -5 to 30°C. The reaction times in the first reaction step of the process may vary within wide limits, a time of approximately from 1 to 10 hours, preferably from 2 to 8 hours and most preferably 2 to 3 hours having proved practicable.

A colorant in an ink of the invention comprises preferably at least one pigment. A colorant also may be a mixture of two or more pigments, which in combination provide a desired color, since any color can be obtained by merely mixing two or more primary colors together,. As defined herein, "primary colors" mean cyan, yellow, magenta, white, and black. A colorant may also be a mixture of at least one pigment and at least one dye.

Titanium dioxide can be added to the ink to increase the opacity of the pattern.

In accordance with the present invention, a surfactant added in an ink of the invention preferably has a rapid diffusive characteristic and is capable of reducing surface tension under highly dynamic conditions, such as met in pad-transfer printing with a water-based ink. Pad-transfer printing involves picking up inks by a silicone pad from a cliché and then transferring the picked up inks from the pad to a receiving surface of an article (e.g. a molding surface of a mold for making a contact lens) within a limited time period (e.g. less than 10 second). During the step of picking up inks by a pad from a cliché, new ink/pad interface and ink/air interface are created and it takes a finite amount of time for the surfactant molecules to diffuse to and adsorb at the newly created ink/pad interface and the ink/air interface and thereby for the surface tension to reach equilibrium. Since the step of picking up inks by a pad from a cliché is typically accomplished within a finite amount of time (e.g. a few seconds), there is no enough time for establishing the thermodynamic equilibrium between the surface layer and bulk ink. It is discovered that, when a rapid diffusive surfactant present in a water-based ink in an amount sufficient to provide the ink a dynamic surface tension of less than 40 mN/m, preferably less than 38 mN/m, more preferably less than 35 mN/m, at a surface age of 1 second, a silicone pad can easily and completely pick up an inked image from a cliché and one can prevent ink drops in the inked image from pooling on the silicone pad, thereby reproducing the designed colored image with relatively high quality and resolution.

Examples of preferred rapid diffusive surfactants are acetylenic diol-based surfactants. Preferably, a surfactant in a water-based ink of the invention is Surfynol® 420 surfactant (ethoxylated acetylenic diols). Surfynol® is a registered Trademark of Air Products and Chemicals, USA. The concentration of Surfynol® 420 surfactant in an ink of the invention is preferably from about 0.03% to about 0.16% by weight.

Static (also known as equilibrium) surface tension can be measured according to the DuNouy Ring Method or the Wilhelmy plate method. Dynamic surface tension can be measured, for example, by the pendant drop technique as described in Example 4, or by using SensaDyne-Tensiometers.

In accordance with the invention, an ink of the invention preferably comprise an initiator, more preferably a photoinitiator, in an amount sufficient to allow the ink to be cured with an energy exposure which is comparable with an energy exposure required for curing a lens-forming material to be used for making lenses. Preferably, the energy exposure required for curing the ink is about 0.2 to 5 folds, more preferably 0.5 to 2 folds, of an energy exposure required for curing the lens-forming material to be used.

Energy exposure (E) is defined as the amount of energy striking a surface and measured in term of energy/area ($J/cm^2$). A fluid composition generally needs to be subjected to a minimal energy exposure to cause a sufficient amount of initiator to form free radicals, thereby causing vinyl groups in the monomer / prepolymer to crosslink, and/or polymerize.

Suitable photoinitiators preferred by the inventors are Irgacure® 2959, Irgacure® 907, Irgacure® 500, Irgacure® 651, Irgacure® 369, Darocure® 1173, or Darocure® 4265. (Irgacure® and Darocure® are registered Trademarks of Ciba Speciality Chemicals Inc., Basel, Switzerland.) In addition, combinations of initiators can be used.

The distortion of a colored image on a molding surface of a mold resulting from dispensing a lens-forming material thereon is called smearing or color smearing. Such smearing can be detrimental to the final product (colored contact lenses) since the resulting colored images on lenses are distorted. By (entire or partial) UV-curing of a water-based ink on a molding surface of a mold before dispensing a lens-forming material therein, smearing effects can substantially be reduced. Since colorants (e.g., pigments) can adversely impact UV radiation intensity a relatively high UV radiation energy exposure may be required to cure an ink. This problem can be solved by adding a photoinitiator in a water-based ink to reduce energy exposure required for curing an ink. An ink can be partially or entirely cured to an

extent so that no smearing will occur. An advantage of partially curing of an ink is that residual (uncrosslinked) ethylenically unsaturated groups can participate in crosslinking reaction of a lens-forming material and as such the colored film can be covalently attached to the resultant lens.

In accordance with the invention, the ink comprises preferably from 0.4% to 2.4% by weight, more preferably from 0.55% to 2.1% by weight, even more preferably from 0.7% to 1.5% by weight of a photoinitiator.

The inks of the invention can optionally include one or more vinylic monomers or macromers.

The inks of the invention can also optionally (but preferably do not) include one or more members selected from the group consisting of a crosslinker, an antimicrobial agent, a humectant, an antioxidant agent, an anti-coagulating agent, and other additives known in the art.

A "cross linker" refers to a compound comprising two or more functional groups, as they are known in the art. A cross linker molecule can be used to crosslink two or more monomers or polymer molecules.

The viscosity of an ink for pad-transfer printing is also important for maintaining print quality. The viscosity is preferably above 100 mPa·s (centipoise (cps)); more preferably above 200 mPa·s (cps) even more preferably above 350 mPa·s (cps). The viscosity of an ink solution can be as high as about 5,000 mPa·s (cps) but is preferably between 900 to 3500 mPa·s (cps).

In a preferred embodiment, an ink of the invention comprises: water in an amount of from 30% to 98% by weight, preferably from 50% to 93% by weight; a water-soluble and actinically-curable binder polymer in an amount of from 2% to 40% by weight, preferably 6% to 30%; and a colorant in an amo unt of from 0.5% to 30% by weight, preferably 1.5% to 20%; a rapid diffusive surfactant (preferably an acetylenic diol-based surfactant, more preferably Surfynol® 420 surfactant) in an amount of from 0.03% to 0.20% by weight; and a photoinitiator in an amount of from 0.4% to 2.4% by weight, preferably from 0.55% to 2.1% by weight, even more preferably from 0.7% to 1.5% by weight.

For pad transfer printing according to the method of the invention any known suitable silicone pad can be used. Silicone pads are commercially available. However, different pads could give different print qualities. A person skilled in the art will know how to select a pad for a given ink.

In accordance with the invention, an ink of the invention can be applied on the molding surface of one or both mold portions by using pad transfer printing (or pad printing) to form a colored coat (with a color image). A colored coat can be applied on the molding surface defining the posterior (concave) surface of a contact lens or on the molding surface defining the anterior surface of a contact lens or on both mold portions. Preferably, a colored coat (with a color image) is applied on the molding surface defining the anterior surface of a contact lens. However, there are special cosmetic effects achievable by providing a pattern on both the anterior and posterior surfaces of a contact lens. For instance, a colored pattern of one color can be applied to the molding surface defining the back surface of the lens (for instance, white) and the same or different colored pattern can be applied to the molding surface defining the front surface of the lens (for instance, dark blue). This then would result in a lens that could have either a multi-color textured appearance for extremely lifelike appearance, or a brighter tint using a white background to reflect back out at the observer.

If the lens is intended to be natural in appearance, the pattern applied to the lens preferably contains voids. Examples of such patterns are disclosed in US 5160463 and US 5414477.

Optionally, a transferable coating can be applied to a molding surface of a mold before applying the ink by pad transfer printing. A transfer coating is intended to describe a coating which can be detached from a molding surface of a mold and become integral with the body of a contact lens molded in the mold. A transferable coating can be applied to a molding surface of mold by any suitable technique, such as, for example, spraying, printing, swabbing, or dipping. A transferable coating can be prepared from a solution comprising polymerizable components. For example, a transferable coating with substantially uniform thickness (less than 200 microns) can be prepared by spraying a molding surface with a solution having the composition (without colorant) of an ink to be used or a solution of prepolymer or a lens-forming material to be used. This transferable coating can optionally be cured to form a transferable clear film (without a ny pigment but optionally with dyes including reactive dyes). One or more colored patterns ca n then be printed on this transferable coating or film. By applying a transferable coating before printing, one can make a colored lens in which printed colored patterns are imbedded ju st below a film derived from the transferable coating. Such lens may be more comfortable for wearing and have much less susceptibility to colorant leaching out of the colored lens.

After printing an ink of the invention on a molding surface of a mold, the printed ink can be cured by UV or other actinic radiation to form a colored film in accordance with the invention. It is desirable that the printed ink is cured actinically to an extent to minimize loss of pattern definition of the colored coat resulted from subsequent filling of a lens-forming material.

Any lens-forming materials can be used in the invention and is not presently considered a critical part of this aspect of the invention. Lens forming materials that are suitable in the fabrication of contact lenses are illustrated by numerous issued US patents and familiar to those skilled in the art. Preferred lens-forming materials are capable of forming hydrogels. A lens-forming material can comprise one or more prepolymers, optionally one or more vinylic monomers and/or macromers and optionally further include various components, such as photoinitiator, visibility tinting agent, fillers, and the like. It should be understood that any silicone-containing prepolymers or any silicone-free prepolymers

can be used in the present invention. Preferred lens-forming materials, wh ich are particularly ophthalmically compatible are HEMA-based or silicone-based hydrogels. While the selection of a lens-forming material is largely determined upon the final modality of use of the final contact lens, the presently preferred lens material is Nelfilcon. Nelfilcon contact lenses are available commercially from CIBA Vision Corp., US.

The invention provides methods for enhancing the quality and resolution of a colored image on a contact lens obtained through a pad printing method with a water based ink. By adding a rapid diffusive surfactant into a water-based ink to lower the surface tension of the ink to less than 40 mN/m at surface age of 1 second, one can minimizing or prevent ink drops in an inked image picked up by a silicone pad from pooling on the silicone pad and thereby preserve image quality and resolution. By adding an initiator in a water-based ink in an amount sufficient to allow the ink to be cured with an energy exposure which is comparable with an energy exposure required for curing the lens-forming material, one can cure a colored coat printed on a molding surface of a mold in a substantially uniform manner to form a colored film before dispensing a lens forming material into the mold, so that not only color smearing but also built-in stresses in a resultant colored contact lens can be minimized or eliminated.

## Examples

Unless otherwise specified percentages are based on weight percentages.

### Example 1

Table 1

| Ink | Composition | | |
|---|---|---|---|
| | Nelfilcon[1] | Black iron oxide | Surfynol® 420 surfactant |
| B1 | 86.16% | 13.84% | 0 |
| B2 | 86.01% | 13.84% | 0.15% |

1. An aqueous solution of Nelfilcon (30% by weight of Nelfilcon and 70% by weight of water). Nelfilcon is an acrylated- poly(vinyl alchohol, a product of Ciba Vision Corp., US

Two black ink are prepared to have the compositions shown in Table 1.

Each ink (B1 or B2) is used to print (by pad transfer printing) a black outer starburst pattern onto a portion of the molding surface of a mold, the portion of the molding surface corresponding to the iris region of a colored contact lens. Figures 1a and 1b show the images of black inks picked up by conical silicone pad from a cliché. In the absence of Surfynol® 420 surfactant, the patterns of the colored image is distorted or lost due to pooling of ink drops on the silicone pad (Fig. 1a). In the presence of 0.15% of Surfynol® 420 surfactant in a water-based ink, no pooling of ink drops is observed on the silicone pad and the patterns and resolution of the colored image are substantially preserved (Fig. 1b).

### Example 2

Five different green inks are prepared to have varying initiator (Irgacure® 2959) and surfactant (Surfynol® 420) concentration as shown in Table 2. The percentage of each components is by weight.

**Table** 2

| Ink | Composition | | | |
|---|---|---|---|---|
| | **Nelfilcon[1]** | **chromium sesquioxide** | **Surfynol® 420 surfactant** | **Irgacure® 2959 photoinitiator** |
| 1558-85-1 | 83.24% | 16.09% | 0.048% | 0.71% |
| 1558-85-2 | 82.49% | 16.09% | 0.094% | 1.40% |
| 1558-85-3 | 81.74% | 16.09% | 0.148% | 2.10% |
| 1558-85-4 | 83.14% | 16.09% | 0.151% | 0.70% |

(continued)

| Ink | Composition | | | |
|---|---|---|---|---|
| | Nelfilcon[1] | chromium sesquioxide | Surfynol® 420 surfactant | Irgacure® 2959 photoinitiator |
| 1558-85-5 | 81.84% | 16.08% | 0.050% | 2.11% |
| 1. An aqueous solution of Nelfilcon (30% by weight of Nelfilcon and 70% by weight of water | | | | |

These inks are used to print on the glass female mold halves of reusable molds shown in Figs. 1-9 of US 6627124 according to pad transfer printing technique. The male mold halves are made of quartz. The inks are cured under a Hamamatsu lamp with a fiber optic pro be. No cut-off filter is used. The light is passed through a condenser (f=22.5 mm), with a dista nce 40 mm from the condenser to the mold. UVB light between 5.09 and 6.84 mW/cm$^2$ is used for 2 seconds, as measured by a Groebel detector. The intensity is monitored by measuri ng the aperture of the Hamamatsu lamp. Only after a neutral density (density=2.0, 1% transmission) filter, it is found that the power needed to cure the 1558-85-1 ink is between 20 and 28 mW/cm$^2$

It is noted that when using different power detectors (e.g., such as a ESE sensor or a Groebel detector), different values of radiation power from a single UV radiation source can be found.

After curing the printed ink on female mold halves, a Nelfilcon solution containing abo ut 30% Nelfilcon and 0.1 % Irgacure® 2959 is dispensed onto the printed female mold halves by using an EFD automatic dispenser (4 bar, 1.2 sec). The female mold halves are allowed to sit for 10 seconds before mating then with corresponding male mold halves and closing molds by using a pneumatic closing system. The Nelfilcon is UV cured with a Dr. Groebel lamp, with a 305 nm (50% transmission) cut-off filter installed in the condenser. The molds are opened and resultant colored contact lenses are stored in DI water until use.

Colored contact lenses are examined by imaging under back-lighting conditions to emphasize contrast. Imaging is performed using a parafocal zoom lens (0.7x-4.5x, VZM-450, Edmund Scientific) with a 0.5x supplemental lens. A Sony XC-999 camera connected to a Matrox Meteor 2 frame grabber allowed images to be taken with Archive4Images (A41) software (Aquinto). The A4A software automatically exports the images, which then are examined for print quality and resolution.

After curing these inks with UV radiation of 5-7 mW/cm$^2$, the lenses are made and inspected for color smearing. Only at the high initiator level (2.1 %) no color smearing is observed while at the middle and low initiator levels, signs of color smearing are observed.

The light intensity is varied with a low initiator ink formulation (formulation 1558-58-1, 0.7% initiator) to determine if more light could cure the ink. Color smearing seems to be minimized when curing UV radiation of 20-28 mW/cm$^2$ (between 11 and 12% aperture). Potentially all ink in this initiator range could be cured if the intensity are set above 30 mW/cm$^2$.

Lenses made with all Surfynol® levels showed good transfer of the ink from the pad to the mold. It is observed that low Surfynol® levels seem to correspond with an increase in color intensity. This could be due to less spreading of the ink on the silicone pad, but not enough to cause pooling.

**Example 3**

The following samples are prepared for static (equilibrium) surface tension measurements.

An organic solvent-based green ink (CB Green) is prepared by mixing 26.7% by weight of an activation solution (containing 15.42% by weight of HDI (1,6 hexamethylene diisocyanate); 75.7% by weight of HEMA (hydroxyethylmethacrylate); 8.45% EOEMA (2-ethyoxyethyl methacrylate); and 0.43% Vazo-64) with a green paste (containing 0.03% by weight of phthalocyanine blue; 7.59% by weight of chromium oxide green; 28.53% by weight of ethyl lactate; 63.85% by weight of a binder). The binder is prepared by partial polymerization of a composition comprising 38.42% by weight of HEMA; 4.2% by weight of EOEMA; 56.93% by weight of Cyclopentanone; 0.23% by weight of 2-mercaptoethanol; 0.21% by weight of Vazo-64; and 0.01% by weight of MEHQ (methylether hydroquinone) according to the procedures described in US 4668240.

**Ink 1574-88-1** is prepared by mixing 9.68% Chromium Oxide, 1.00% Irgacure® 2959, 89.32% Nelfilcon solution (30% by weight of Nelfilcon and 70% by weight of water)

**Ink 1558-85-1** as prepared in Example 2.

**Ink 1558-85-3** as prepared in Example 2.

**Nelfilcon 1**. This aqueous solution contains 30% by weight of Nelfilcon and 50 ppm TEMPO (4-hydroxy-2,2,6,6,-tetramethyl-1-piperidinyloxy, free radical) (CAS no. 2226-96-2).

**Nelfilcon 2.** This aqueous solution contains 30% by weight of Nelfilcon and 0.3% by weight of poloxamer 108.

The static (equilibrium) surface tensions of inks and solutions are determined by DuNouy ring method or the Wilhelmy plate method. Results are shown in Table 3. The surface tension of water as measured by the DuNouy ring method is 72.8 dynes/cm (or mN/m).

Table 3

| Samples | CB Green | Nelfilcon 1 | Nelfilcon 2 | 1574-88-1 | 1558-85-1 | 1558-85-3 |
|---|---|---|---|---|---|---|
| Surface tension (mN/m) | 33.2 | 44.6 | 40.3 | 44.8 | 32.2 | 31.3 |

**Example 4**

The non-equilibrium surface tensions of two inks (1558-85-1 and 1558-85-3) are determined by the pendant drop technique. The pendant drop technique works as follows.

A drop (having a volume of 4.0 microliters) of an ink is formed over a period of 1.0 second on the end of a downward-pointing capillary tip (i.e., a needle with a 1.82 mm O.D., 1.52 mm I.D.). The drop is typically formed to about 90% of its detachment volume (from the capillary). The drop is then digitally imaged as function of time (in real time) and 300 points (150 pairs of two vertically separate points) along the drop surface in each images (in real time) are used to determine the mean curvature of the drop at a specific time. From one drop image, surface tension is determined at least 150 times. These surface tension values are averaged to give a single value for the overall surface tension of the drop at a specific time.

According to Laplace's equation, the pressure difference at any given point on a curved surface ($\Delta P$) is proportional to mean curvature of the surface at that point (($1/r_1 + 1/r_2$), as defined by the following equation

$$\Delta P = (1/r_1 + 1/r_2)\ 2\ \sigma$$

in which $r_1$ and $r_2$ are the principal radii of curvature and $\sigma$ is the surface tension. For a pendant drop, the pressure difference within the drop between any two vertical positions (A and B) is:

$$\Delta P_A - \Delta P_B = \Delta\rho\ g\ Z$$

where $\Delta\rho$ = the difference in density between the liquid that is forming the drop and the bulk gas, g = gravity, and Z = the vertical distance between the two positions (A and B). Combination of above equations yields the following equation for calculating surface tension.

$$(\ (1/r_1 + 1/r_2)_{at\ A} - (1/r_1 + 1/r_2)_{at\ B}\ )\ 2\ \sigma = \Delta\rho\ g\ Z$$

For each ink, two separate tests are performed, i.e., monitoring two individual pendant drops as function of time. The results are shown in Figure 2.

It can be noticed from Figure 2 that the equilibrium surface tension of the 1558-85-3 ink is lower than that of the 1558-85-1 ink sample, but they also show that the time frame in which the equilibrium surface tension is approached is much shorter for the 1558-85-3 ink sample (about 30 seconds in the case of 1558-85-3, versus about 60 seconds in the case of 1558-85-1). Also, the measurable surface tension range is much larger for the 1558-85-1 sample - about 5.0 mN/m from 1.0 second to equilibrium. For 1558-85-3, the surface tension range is only about 2.7 mN/m from 1.0 second to equilibrium.

**Example 5**

A variety of black and green inks are prepared by combing the Nelfilcon solution (30% Nelfilcon, 0.3% poloxamer, 50 ppm HTMPO, and water), Surfynol®420, and Irgacure® 2959 with one of two pigments: chromium oxide (C.O.) and

black iron oxide (B.I.O.). The composition of each ink is shown in Table 4 (all of the percentages are by weight).

Table 4

| Ink No. | Nelfilcon [%] | B. I. O. [%] | C. O. [%] | Surfynol® 420 [%] | Irgacure® 2959 [%] |
|---|---|---|---|---|---|
| 1558-74-1 | 86.16 | 13.84 | | | 0.09 |
| 1558-74-3 | 80.95 | | 19.05 | | 0.08 |
| 1558-74-7 | 86.01 | 13.84 | | 0.15 | 0.09 |
| 1558-74-9 | 80.80 | | 19.05 | 0.15 | 0.08 |
| 1574-11B# | 72.75 | | 17.11 | 0.13 | 0.08 |
| 1574-13A | 81.55 | | 16.02 | 0.13 | 2.38 |
| 1574-4 | 80.83* | | 19.02 | 0.15 | 0.08 |
| 1574-8 | 86.01* | 13.83 | | 0.16 | 0.09 |

* prepared from Nelfilcon solution which is free of HTMPO.
# containing 10.01% ethanol.

The above prepared inks are used to produce colored contact lenses according to a pad printing method, using a single reusable mold comprising a glass female mold half and a quartz male mold half, based on prints of two patterns The one is printed with a black ink and the other pattern is printed with a green ink. Each of the patterns is etched into either a ceramic or steel cliché. Either a Phoenix or TampoPrint pad is used. The production process comprises printing the molding surface of the female mold half separately with a black ink and a green ink; dosing a Nelfilcon solution (as lens-forming material) into the female mold half with printed patterns; closing the mold (i.e., placing the male mold half on top of the female mold half and closing the mold); curing the Nelfilcon solution within the mold to form a colored lens; and removing the formed lens from the mold.

It is noted that prints, in particular, the pattern prints, smear underneath the Nelfilcon dosing drop and during the mold closing process. Various experiments have been carried out to determine the causes of smearing. In first series of experiments, inks are allowed to dry on the female mold for 120 seconds prior to the dosing step. This is designed to allow sufficient water to evaporate from the ink to increase its viscosity sufficiently to prevent smearing. This experiment showed ink smearing in the dosing/closing steps. In another experiment, the speed of Nelfilcon dosing (on printed mold) is slowed to determine effects of dosing speed on smearing. Results do not show that smearing is eliminated though there is slight reduction in smearing. In another experiment, the Nelfilcon solution is dispensed (dosed) in the center of the female mold rather than offsetting it to the side at different dosing quantity (about 25 mg or about 44 mg). Smearing is still observed. In another experiment, inks are allowed to be partially dry on the pad before being printed on the mold. The longest dry time (about 23 seconds) can lessen but not eliminate smearing. Another experiment are done to examine the effects of reducing the relative humidity, speeding up the mold closing process, increasing the amount of Nelfilcon being dosed, and adding a volatile solvent (ethanol) to the ink on smearing. Smearing is observed in all experiments.

It is found that smearing can be completely eliminated (or at least substantially reduced) by adding photoinitiator (Irgacure® 2959) to the ink and exposing it to sufficient amounts of UV radiation on the mold half prior to dosing. The printing inks also contained surfactant, Surfynol® 420, to control ink spreading on both the hydrophobic silicone pad and the hydrophilic glass mold half.

Table 5 shows the results (green pattern smearing) of experiments where printed inks on the molding surface of female mold half are irradiated with UV light under various conditions before dosing a Nelfilcon solution into the mold. In experiments 1-4, the UV radiation power is about 1.60 $mW/cm^2$ determined by Groebel detector. In experiments 7-13, a UV light source with high output power is used and a light guide is used to direct the UV light to irradiate directly the molding surface of the female mold half.

Table 5

| Experiment No. | Green Ink | UV Exposure time [s] | Smearing |
|---|---|---|---|
| 1 | 1558-74-9 | 4 | ++++ |
| 2 | 1558-74-9 | 8 | ++++ |
| 3 | 1558-74-9 | 30[a] | ++ |

(continued)

| Experiment No. | Green Ink | UV Exposure time [s] | Smearing |
|---|---|---|---|
| 4 | 1574-13A | 8[a] | + |
| 5 | 1574-13A | 0 | ++++[b] |
| 6 | 1574-13A | 0 | ++++[c] |
| 7 | 1574-13A | 30 | - |
| 8 | 1574-13A | 7 | - |
| 9 | 1574-13A | 4 | - |
| 10 | 1574-13A | 15[d] | - |
| 11 | 1574-13A | 2 | - |
| 12 | 1574-13A | 1 | + |
| 13 | 1574-4 | 15 | +++ |
| a. under nitrogen purge; b. no UV radiation and 6 minutes delay between printing and dosing steps; c. blow nitrogen onto the mold for 30 seconds prior to dosing; d. UV radiation though the female mold half. | | | |

Experiment 4 and its control (experiment 5) show that smearing can be reduced when the ink with the increased amount of Irgacure® 2959 is exposed to UV radiation prior to dosing. The elimination of smearing is further confirmed in other experiments, e.g., experiments 7-12 where UV radiation exposure of inks printed on the female mold prior to dosing eliminates smearing. Experiment 13 shows that the smearing may occur as the amount of UV radiation energy exposure decreases below a threshold value for a given photoinitiator concentration.

**Example 6**

A variety of inks are prepared by combining the Nelfilcon solution (30% Nelfilcon and 70% water), Surfynol®420, and Irgacure 2959 with various pigments: 0-3.8% titanium dioxide; 0-2.61% phthalocyanine blue (PCN blue); 0-0.45% phthalocyanine green (PCN green); 0-6% yellow iron oxide; 0-1.84% red iron oxide; 0-12% chromium oxide; 0-13.8% black iron oxide. Each ink comprises 0.05%, 0.1% or 0.15% by weight of Surfynol®420. Each ink comprises 0.70% or 1.4% by weight of Irgacure® 2959 (photoinitiator), depending upon the color hue, surfactant level, and initiator level desired. For example, a red ink could be made by using the high level of red iron oxide and low levels of the other pigments. The Nelfilcon levels are varied from 84.84% to 97.64% by weight to achieve 100% values.

These inks are used to produce colored contact lenses according to a pad printing method, using a single reusable mold comprising a glass female mold half and a quartz male mold half, printing at least two patterns. The patterns can be printed, one by one, on a molding surface of a mold for making contact lenses. Each of the patterns is etched into either a ceramic or steel cliché. Either a Phoenix or TampoPrint pad is used. After printing, the ink is cured with a Hamamatsu lamp (model L8333) with an installed 297 nm UV cure filter. The light is funneled through a light guide and passed through a condenser (f=16 mm) with a distance around 50 mm from the condenser to the mold. The condenser is mounted at a slight angle (~30° from vertical), with respect to the molding surface, to allow the printing to occur unencumbered. The light intensity is controlled by adjusting the aperture of the Hamamatsu lamp and measured with a Dr. Groebel hand-held UVB monitor.

After curing the printed ink on the female mold half, a Nelfilcon solution containing about 30% Nelfilcon and 0.1 % Irgacure® 2959 is dispensed onto the printed female mold half by using an EFD automatic dispenser (4 bar, 1.2 sec). The female mold halves are allowed to sit for several seconds before mating them with corresponding male mold halves and closing molds by using a pneumatic closing system. The Nelfilcon is UV cured under 2 different UV lights (1.8 mW/$cm^2$ each) for total exposure time of 4.9 sec.

Clear controls (contact lenses without printed images) are made simultaneously with another mold of the same type.

All lenses are subjected to conventional steam autoclave.

Experiments show that initiator concentration affects the amount of UV radiation needed to cure the ink. When the initiator concentration increases from 0.7 to 1.4%, the intensity of UV radiation required for curing ink can be reduced by about 57% while still minimizing color smearing. The intensity of UV radiation required for curing ink seems to be

independent of pigment color or loading (in the concentration range used). This indicates that a single UV radiation intensity can be used, despite the different colors to be printed, for a given initiator concentration. It is desirable that the initiator concentration can be set at 0.9±0.2% and a UV dosage about 5.4 mW/$cm^2$ is used.

Results indicate that a range of surfactant levels (0.05-0.15%) could be used without dramatically affecting the print quality of the color images, as observed by eye and by microscopy.

Some curling of the lenses are observed in resultant colored contact lenses produced in a process where relatively high UV radiation power is used to cure inks on molds. The curling seems to be exacerbated by dosing the UV curing light at an angle related to central axis of the mold. Possibly a gradient curing of the ink could cause buiJt-in stresses that cause the hydrated lens to curl. A UV radiation with a substantially uniform distribution of energy is preferably used to cure the ink printed on a molding surface of a mold.

Mechanical analysis of the colored lenses and control lenses shows that the colored lenses are at least statistically equal to the control lenses. Resultant colored lenses pass cell growth inhibition (CGI) tests. After storing for more than three months at room temperature, colored lenses pass adhesion tests.

## Claims

**1.** A method for making colored contact lenses, comprising the steps of:

(a) obtaining a water-based ink,
the ink having a viscosity of greater than 100 mPa·s (centipoise), and
the ink comprising water, at least one colorant, a water-soluble binder polymer having ethylenically unsaturated groups, an initiator, and a surfactant,
wherein the surfactant is present in the ink in an amount sufficient to provide the ink a dynamic surface tension of less than 40 mN/m at surface age of 1 second;
(b) applying the ink, by using pad transfer printing technique, to at least a portion of at least one of molding surfaces of a lens mold to form a colored coat;
(c) actinically or thermally curing the ink printed on the mold to form a colored film, wherein the printed ink is cured to an extent so that no noticeable color smearing is observed by examination with naked eyes;
(d) dispensing a lens-forming material into the lens-forming cavity of the mold; and
(e) actinical ly or thermally curing the lens-forming material within the lens-forming cavity to form a colored contact lens, whereby the colored film detaches from the molding surface and becomes integral with the body of the contact lens, wherein the colored film becomes part of one of the anterior and posterior surface of the colored contact lens and has a good adhesion to the lens.

**2.** The method of claim 1, wherein the ink comprises: water in an amount of from 30% to 98% by weight; a water-soluble binder polymer in an amount of from 2% to 40% by weight; a colorant in an amount of from 0.5% to 30% by weight; a surfactant in an amount of from 0.03% to 0.20% by weight; and a initiator in an amount of from 0.4% to 2.4% by weight; wherein the viscosity of the ink is from 900 to 3500 mPa·s.

**3.** The method of claim 1, wherein the initiator is present in an amount sufficient to allow the ink to be cured with an energy exposure 0.2 to 5 folds of an energy exposure required for curing the lens-forming material.

**4.** The method of claim 1, wherein the step (c) is an actinically curing step using UV radiation with an energy exposure required for curing the ink which is 0.5 to 2 folds of an energy exposure required for curing the lens-forming material.

**5.** The method of claim 1, wherein the surfactant comprises acetylenic diol-based surfactants and wherein the amount of surfactant is from 0.03% to 0.16% by weight.

**6.** The method of claim 1, wherein the initiator is a photoinitiator and the amount of the photoinitiator is from about 0.4% to about 2.4% by weight.

**7.** The method of claim 1, wherein the water-soluble binder polymer is an actinically curable prepolymer selected from the group consisting of: a water-soluble crosslinkable poly(vinyl alcohol) prepolymer; a water-soluble vinyl group-terminated polyurethane; derivatives of a polyvinyl alcohol, polyethyleneimine or polyvinylamine; a water-soluble crosslinkable polyurea prepolymer; crosslinkable polyacrylamide; crosslinkable statistical copolymers of vinyl lactam, methyl methacrylate and a comonomer; crosslinkable copolymers of vinyl lactam, vinyl acetate and vinyl alcohol; polyether-polyester copolymers with crosslinkable side chains; branched polyalkylene glycol-urethane prepolymers;

polyalkylene glycol-tetra(meth)acrylate prepolymers; crosslinkable polyallylamine gluconolactone prepolymers, and mixtures thereof.

**8.** The method of claim 7, wherein the binder polymer is a water-soluble, crosslinkable poly(vinyl alcohol) prepolymer having a molecular weight of at least about 2000 and comprising from about 0.5 to about 80%, based on the number of hydroxyl groups in the poly(vinyl alcohol), of units of the formula I, I and II, I and III, or I and II and III

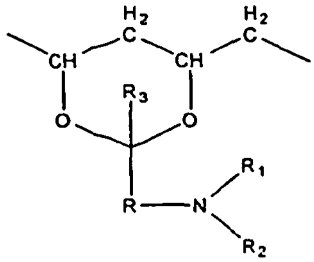

I

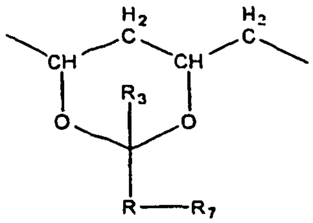

II

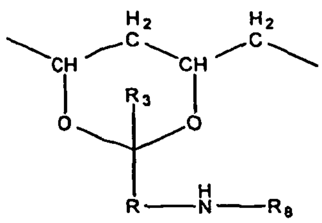

III

in which

the molecular weight refers to a weight average molecular weight ($M_w$) determined by gel permeation chromatography,
R is linear or branched alkylene having up to 12 carbon atoms,
$R_1$ is hydrogen or lower alkyl having up to 7 carbon atoms,
$R_2$ is an ethylefinically unsaturated, electron-withdrawing, crosslinkable radical having up to 25 carbon atoms,
$R_3$ is hydrogen, a $C_1$ -$C_6$ alkyl group or a cycloalkyl group,
$R_7$ is a primary, secondary, tertiary amino group, or a quaternary amino group of the formula $N^+(R')_3X^-$, in which each R', independently of the others, is hydrogen or a $C_1$ -$C_4$ alkyl radical and X is a counterion,
$R_8$ is the radical of a monobasic, dibasic or tribasic, saturated or unsaturated, aliphatic or aromatic organic acid or sulfonic acid.

**9.** The method of claim 7, wherein the binder polymer is a water-soluble, crosslinkable polyurea prepolymer of formula (1)

$$CP\text{-}(Q)_q \qquad (1)$$

wherein q is an integer of ≥3, Q is an organic radical that comprises at least one ethylenically unsaturated group, CP is a multivalent branched copolymer fragment comprising segments A and U and optionally segments B and T, wherein A is a bivalent radical of formula

$-NR_A-A_1-NR_A'-$ (2),

wherein $A_1$ is the bivalent radical of $-(R_{11}-O)_n-(R_{12}-O)_m-(R_{13}-O)_p-$, a linear or branched $C_2$-$C_{24}$ aliphatic bivalent radical, a $C_5$-$C_{24}$ cycloliphatic or aliphatic-cycloaliphatic bivalent radical, or a $C_6$-$C_{24}$ aromatic or araliphatic bivalent radical, $R_{11}$, $R_{12}$, $R_{13}$, independently of one other, are each linear or branched $C_2$-$C_4$-alkylene or hydroxy-substituted $C_2$-$C_8$ alkylene radical, n, m and p, independently of one another, are each a number from 0 to 100, provided that the sum of (n+m+p) is 5 to 1000, and $R_A$ and $R_A$ independently of each other is hydrogen, an unsubstituted $C_1$-$C_6$alkyl, a substituted $C_1$-$C_6$alkyl, or a direct, ring-forming bond;
T is a bivalent radical of formula

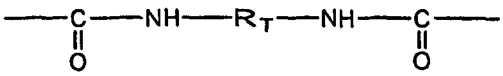

(3),

wherein $R_T$ is a bivalent aliphatic, cycloaliphatic, aliphatic-cycloaliphatic, aromatic, araliphatic or aliphatic-heterocyclic radical;
U is a trivalent radical of formula

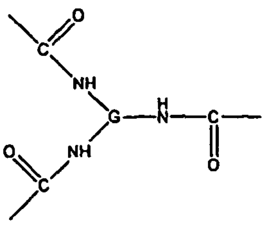

(4),

wherein G is a linear or branched $C_3$-$C_{24}$ aliphatic trivalent radical, a $C_5$-$C_{45}$ cycloaliphatic or aliphatic-cycloaliphatic trivalent radical, or a $C_3$-$C_{24}$ aromatic or araliphatic trivalent radical;
B is a radical of formula

$-NR_B- B_1-NR_B'-$ (5),

wherein $R_B$ and $R_{B'}$ independently of each other is hydrogen, an unsubstituted $C_1$-$C_6$alkyl, a substituted $C_1$-$C_6$alkyl, or a direct, ring-forming bond, $B_1$ is a bivalent aliphatic, cycloaliphatic, aliphatic-cycloaliphatic, aromatic or araliphatic hydrocarbon radical that has at least one primary or secondary amine group or is interrupted by at least one amine group $-NR_m$ in which $R_m$ is hydrogen, a radical Q mentioned above or a radical of formula

Q-CP'- (6),

wherein Q is as defined above, and CP' is a bivalent copolymer fragment comprising at least two of the above-mentioned segments A, B, T and U; provided that in the copolymer fragments CP and CP' a segment A or B is followed by a segment T or U in each case; provided that in the copolymer fragments CP and CP' a segment T or U is followed by a segment A or B in each case; provided that the radical Q in formulae (1) and (6) is bonded to a segment A or B in each case; and provided that the N atom of $-NR_m$ is bonded to a segment T or U when $R_m$ is a radical of formula (6).

**10.** The method of claim 1, wherein a transferable clear coating is applied onto the molding surface of the mold before step (b).

**Patentansprüche**

1. Verfahren zur Herstellung farbiger Kontaktlinsen, umfassend die Schritte:

   (a) Bereitstellen einer wasserbasierten Tinte,
   wobei die Tinte eine Viskosität von mehr als 100 mPa·s (centipoise) hat, und
   wobei die Tinte Wasser, mindestens ein Farbmittel, ein wasserlösliches Binderpolymer mit ethylenisch-ungesättigten Gruppen, einen Initiator, und ein Netzmittel enthält,
   wobei das Netzmittel in der Tinte in einer Menge vorhanden ist, die ausreicht der Tinte eine dynamische Oberflächenspannung von weniger als 40 mN/m bei einem Oberflächenalter von 1 Sekunde zu geben;
   (b) Aufbringen der Tinte unter Verwendung eines Tampondruckverfahrens, auf mindestens einen Teil mindestens einer der Formoberflächen einer Linsenform, zur Bildung einer gefärbten Beschichtung;
   (c) aktinisches oder thermisches Härten der auf die Form gedruckten Tinte zur Bildung eines gefärbten Films, wobei die gedruckte Tinte soweit gehärtet wird, dass kein erkennbares Verschmieren der Farbe bei Beobachtung mit blossem Auge festgestellt werden kann;
   (d) Einbringen eines linsenbildenden Materials in den linsenformenden Hohlraum der Form; und
   (e) aktinisches oder thermisches Härten des linsenbildenden Materials im linsenformenden Hohlraum zur Bildung einer gefärbten Kontaktlinse, wobei der gefärbte Film sich von der Formoberfläche ablöst, und integraler Bestandteil des Körpers der Kontaktlinse wird, wobei der gefärbte Film Teil einer der vorderseitigen oder rückseitigen Oberflächen der gefärbten Kontaktlinse wird und eine gute Haftung an die Linse aufweist.

2. Verfahren gemäss Anspruch 1, wobei die Tinte Wasser in einer Menge von 30 bis 98 Gewichts-% enthält; ein wasserlösliches Binderpolymer in einer Menge von 2 bis 40 Gewichts-%; ein Farbmittel in einer Menge von 0.5 bis 30 Gewichts-%; ein Netzmittel in einer Menge von 0.03 bis 0.20 Gewichts-%; und einen Initiator in einer Menge von 0.4 bis 2.4 Gewichts-% enthält; wobei die Tinte eine Viskosität von 900 bis 3500 mPa·s (cps) hat.

3. Verfahren gemäss Anspruch 1, wobei der Initiator in einer Menge anwesend ist, die ausreicht die Tinte mit einer Energiemenge des 0.2 bis 5 fachen einer Energiemenge zu härten, die für die Härtung des linsenbildenden Materials benötigt wird.

4. Verfahren gemäss Anspruch 1, wobei Schritt (c) ein aktinischer Härtungsschritt ist der UV-Strahlung mit einer Energiemenge verwendet, die dem 0.2 bis 5 fachen einer Energiemenge entspricht, die für die Härtung des linsenbildenden Materials benötigt wird.

5. Verfahren gemäss Anspruch 1, wobei das Netzmittel acetylenische Diol-basierte Netzmittel umfasst und wobei die Menge des Netzmittels von 0.03 bis 0.16 Gewichts-% entspricht.

6. Verfahren gemäss Anspruch 1, wobei der Initiator ein Photoinitiator ist und die Menge des Photoinitiators von etwa 0.4 bis etwa 2.4 Gewichts-% entspricht.

7. Verfahren gemäss Anspruch 1, wobei das wasserlösliche Binderpolymer ein aktinischhärtbares Präpolymer ist, das ausgewählt ist aus der Gruppe bestehend aus: einem wasserlöslichen vernetzbaren Poly(Vinylalkohol) Präpolymer; einem wasserlöslichen vinylgruppen-terminierten Polyurethan; Derivaten eines Polyvinylalkohols, Polyethylenimins oder Polyvinylamins; einem wasserlöslichen vernetzbaren Polyharnstoff Präpolymer; vernetzbarem Polyacrylamid; vernetzbaren statistischen Copolymeren des Vinyllactam, Methylmethacrylat und einem Comonomer; vernetzbaren Copolymeren des Vinyllactam, Vinylacetat und Vinylalkohol; Polyether-Polyester Copolymere mit vernetzbaren Seitenketten; verzweigte Polyalkylen-Glykol-Urethan Präpolymere; Polyalkylen-Glykol-Tetra(meth)acrylat Präpolymere; vernetzbare Polyallylamin-Glukonolacton Präpolymere, und Mischungen davon.

8. Verfahren gemäss Anspruch 7, wobei das Binderpolymer ein wasserlösliches, vernetzbares Poly(Vinylalkohol) Präpolymer mit einem Molekulargewicht von mindestens etwa 2000 ist, und etwa 0.5 bis etwa 80%, basierend auf der Zahl der Hydroxygruppen im Poly(Vinylalkohol), Einheiten der Formeln I, I und II, I und III, oder I und II und III enthält

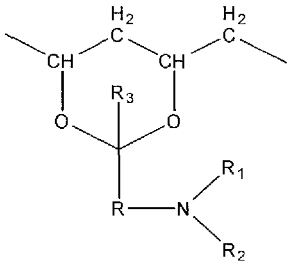

I

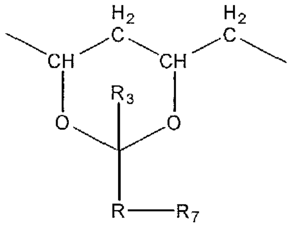

II

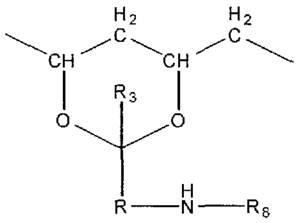

III

worbei

das Molekulargewicht ein mittleres Molekulargewicht ($M_w$) bezeichnet das mittels Gelpermeations-Chromatographie ermittelt wird,
R ein lineares oder verzweigtes Alkylen mit bis zu 12 Kohlenstoffatomen ist, $R_1$ Wasserstoff oder Nieder-Alkyl mit bis zu 7 Kohlenstoffatomen ist,
$R_2$ ein ethylenisch-ungesättigtes, elektronenabziehendes, vernetzbares Radikal mit bis zu 25 Kohlenstoffatomen ist,
$R_3$ Wasserstoff, eine $C_1$ -$C_6$ Alkyl-Gruppe oder eine Cycloalkyl-Gruppe,
$R_7$ ist eine primäre, sekundäre, tertiäre Amino-Gruppe, oder eine quaternäre Amino-Gruppe der Formel $N^+(R')_3X^-$ ist, wobei jedes R', unabhängig von den andreren, Wasserstoff oder ein $C_1$ -$C_4$ Alkylradikal ist und X ein Gegenion ist, $R_8$ ein Radikal einer einbasischen, zweibasischen oder dreibasischen,
gesättigten oder ungesättigten, aliphatischen oder aromatischen organischen Säure oder Sulfonsäure ist.

**9.** Verfahren gemäss Anspruch 7, wobei das Binderpolymer ein wasserlösliches, vernetzbares Polyharnstoff-Präpolymer der Formel (1) ist

$$CP\text{-}(Q)_q \qquad (1)$$

wobei q eine Zahl ≥3 ist, Q ein organisches Radikal ist, das mindestens eine ethylenisch ungesättigte Gruppe enthält, CP ein multivalentes verzweigtes Copolymerfragment ist, welches Segmente A und U und wahlweise Segmente B und T enthält,
wobei A ein zweiwertiges Radikal der Formel

$$-NR_A\text{-}A_1\text{-}NR_A'\text{-} \qquad (2)$$

ist,
wobei $A_1$ ein zweiwertiges Radikal $-(R_{11}\text{-}O)_n\text{-}(R_{12}\text{-}O)_m\text{-}(R_{13}\text{-}O)_p\text{-}$ ist, ein zweiwertiges lineares oder verzweigtes $C_2$-$C_{24}$ aliphatisches Radikal, ein zweiwertiges $C_5$-$C_{24}$ cycloaliphatisches oder aliphatisch-cycloaliphatisches Ra-

dikal, oder ein zweiwertiges $C_6$-$C_{24}$ aromatisches oder araliphatisches Radikal, wobei $R_{11}$, $R_{12}$, $R_{13}$, unabhängig voneinander, jeweils lineare oder verzweigte $C_2$-$C_4$-Alkylen oder Hydroxy-substituierte $C_2$-$C_8$ Alkylen-Radikale sind, n, m und p, unabhängig voneinander, jeweils eine Zahl von 0 bis 100 sind, unter der Voraussetzung, dass die Summe (n+m+p) 5 bis 1000 ist, und $R_A$ und $R_A$' unabhängig voneinander, Wasserstoff, unsubstituiertes $C_1$-$C_6$Alkyl, substituiertes $C_1$-$C_6$Alkyl, oder eine direkte, ringbildende Bindung sind;
T ein zweiwertiges Radikal der Formel

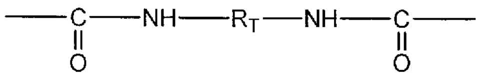

(3) ist,

wobei $R_T$ ein zweiwertiges aliphatisches, cycloaliphatisches, aliphatisch-cycloaliphatisches, aromatisches, araliphatisches oder aliphatisch-heterocyclisches Radikal ist;
U ein dreiwertiges Radikal der Formel

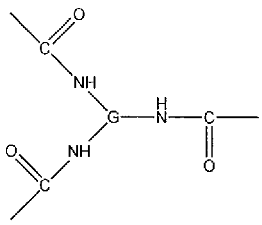

(4) ist,

wobei G ein dreiwertiges lineares oder verzweigtes $C_3$-$C_{24}$ aliphatisches Radikal, ein dreiwertiges $C_5$-$C_{45}$ cycloaliphatisches oder aliphatisch-cycloaliphatisches Radikal, oder ein dreiwertiges $C_3$-$C_{24}$ aromatisches oder araliphatisches Radikal ist;
B ein Radikal der Formel

$$-NR_B-B_1-NR_B'- \quad (5)$$

ist,
wobei $R_B$ und $R_B$' unabhängig voneinander Wasserstoff, unsubstituiertes $C_1$-$C_6$ Alkyl, substituiertes $C_1$-$C_6$ Alkyl, oder eine direkte, ringbildende Bindung sind; $B_1$ ein zweiwertiges aliphatisches, cycloaliphatisches, aliphatisch-cycloaliphatisches, aromatisches oder araliphatisches Kohlenwasserstoff-Radikal ist, das mindestens eine primäre oder sekundäre Amingruppe aufweist oder durch mindestens eine Amingruppe $-NR_m$ unterbrochen ist in welcher $R_m$ Wasserstoff ist, ein oben genanntes Radikal Q oder ein Radikal der Formel

$$Q-CP'- \quad (6),$$

wobei Q wie oben definiert ist, und CP' ein zweiwertiges Copolymer-Fragment ist das mindestens zwei der oben genannten Segments A, B, T und U umfasst; mit der Voraussetzung, dass in den Copolymer-Fragmenten CP und CP' auf ein Segment A oder B in jedem Fall ein Segment T oder U folgt; mit der Voraussetzung dass in den Copolymer-Fragmenten CP und CP' auf ein Segment T oder U in jedem Fall ein Segment A oder B folgt; mit der Voraussetzung, dass das Radikal Q in den Formeln (1) und (6) in jedem Fall eine Bindung zu einem Segment A oder B ist; und mit der Voraussetzung, dass das N-Atom von $-NR_m$ eine Bindung zu einem Segment T oder U ist, wenn $R_m$ ein Radikal der Formel (6) ist.

**10.** Verfahren gemäss Anspruch 1, wobei eine übertragbare klare Beschichtung auf die Formoberfläche der Form vor Schritt (b) aufgebracht wird.

## Revendications

**1.** Procédé de fabrication de lentilles de contact colorées, comprenant les étapes consistant à :

(a) obtenir une encre aqueuse,
l'encre ayant une viscosité supérieure à 100 mPa·s (centipoises), et
l'encre comprenant de l'eau, au moins un colorant, un polymère de liaison hydrosoluble comportant des groupes éthyléniquement insaturés, un initiateur, et un agent de surface,
l'agent de surface étant présent dans l'encre en quantité suffisante pour fournir à cette dernière une tension superficielle dynamique inférieure à 40 mN/m à un âge de surface de 1 seconde ;
(b) appliquer l'encre, au moyen d'une technique d'impression par transfert au tampon, sur au moins une portion d'au moins l'une des surfaces de moulage d'un moule à lentille afin de former une couche colorée ;
(c) durcir actiniquement ou thermiquement l'encre imprimée sur le moule afin de former un film coloré, l'encre imprimée étant durcie à un point tel qu'aucune traînée de couleur visible n'est observée lors de l'examen à l'oeil nu ;
(d) répartir une matière constituant la lentille dans l'empreinte du moule formant la lentille ; et à
(e) durcir actiniquement ou thermiquement la matière constituant la lentille à l'intérieur de l'empreinte formant la lentille pour former une lentille de contact colorée, moyennant quoi le film coloré se détache de la surface de moulage et devient solidaire du corps de la lentille de contact, le film coloré devenant une partie de l'une des surfaces antérieure et postérieure de la lentille de contact colorée et présentant une bonne adhérence à la lentille.

**2.** Procédé selon la revendication 1, dans lequel l'encre comprend : de l'eau à raison de 30 % à 98 % en poids ; un polymère de liaison hydrosoluble à raison de 2 % à 40 % en poids ; un colorant à raison de 0,5 % à 30 % en poids ; un agent de surface à raison de 0,03 % à 0,20 % en poids ; et un initiateur à raison de 0,4 % à 2,4 % en poids ; la viscosité de l'encre étant comprise entre 900 et 3500 mPa·s.

**3.** Procédé selon la revendication 1, dans lequel l'initiateur est présent en quantité suffisante pour permettre à l'encre d'être durcie sous l'effet d'une exposition énergétique qui équivaut à 0,2 à 5 fois celle qui est nécessaire pour durcir la matière constituant la lentille.

**4.** Procédé selon la revendication 1, dans lequel l'étape (c) est une étape de durcissement de type actinique au moyen d'un rayonnement UV avec une exposition énergétique requise pour durcir l'encre qui équivaut à 0,5 à 2 fois celle qui est nécessaire pour durcir la matière constituant la lentille.

**5.** Procédé selon la revendication 1, dans lequel l'agent de surface comprend les agents de surface à base de diol acétylénique et dans lequel la quantité d'agent de surface est de 0,03 % à 0,16 % en poids.

**6.** Procédé selon la revendication 1, dans lequel l'initiateur est un photoinitiateur et la quantité du photoinitiateur est d'environ 0,4 % à environ 2,4 % en poids.

**7.** Procédé selon la revendication 1, dans lequel le polymère de liaison hydrosoluble est un prépolymère actiniquement durcissable choisi dans le groupe constitué par un prépolymère de poly(alcool vinylique) hydrosoluble et réticulable ; un polyuréthane hydrosoluble terminé par le groupe vinyle ; des dérivés d'un alcool polyvinylique, d'une polyéthylènimine ou d'une polyvinylamine ; un prépolymère de polyurée hydrosoluble et réticulable ; du polyacrylamide réticulable ; des copolymères statistiques réticulables de lactame de vinyle, de méthacrylate de méthyle et d'un comonomère ; des copolymères réticulables de lactame de vinyle, d'acétate de vinyle et d'alcool vinylique ; des copolymères de polyéther-polyester à chaînes latérales réticulables ; des prépolymères de polyalkylène glycol-uréthane ramifiés ; des prépolymères de polyalkylène glycol-tétra(méth)acrylate ; des prépolymères de polyallylamine gluconolactone réticulables, et leurs mélanges.

**8.** Procédé selon la revendication 7, dans lequel le polymère de liaison est un prépolymère de poly(alcool vinylique) hydrosoluble et réticulable ayant un poids moléculaire d'au moins environ 2000 et comprenant environ 0,5 à environ 80 %, par rapport au nombre de groupes hydroxyle dans le poly(alcool vinylique), de motifs de formules I, I et II, I et III, ou I et II et III

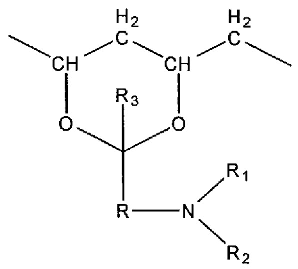

I

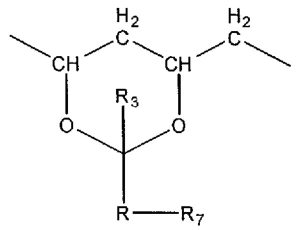

II

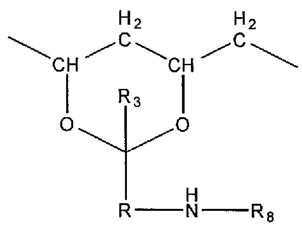

III

dans lesquelles

le poids moléculaire fait référence à un poids moléculaire moyen en poids ($M_p$) déterminé par chromatographie par perméation de gel,
R est un alkylène linéaire ou ramifié ayant jusqu'à 12 atomes de carbone,
$R_1$ est un hydrogène ou un alkyle inférieur ayant jusqu'à 7 atomes de carbone,
$R_2$ est un radical réticulable éthyléniquement insaturé, attracteur d'électrons, ayant jusqu'à 25 atomes de carbone,
$R_3$ est un hydrogène, un groupe alkyle en $C_1$-$C_6$ ou un groupe cycloalkyle,
$R_7$ est un groupe amino primaire, secondaire, tertiaire, ou un groupe amino quaternaire de formule $N^+(R')_3X^-$, dans laquelle chaque R', indépendamment des autres, est un hydrogène ou un radical alkyle en $C_1$-$C_4$ et X est un contre-ion,
$R_8$ est le radical d'un acide sulfonique ou d'un acide organique monobasique, dibasique ou tribasique, saturé ou insaturé, aliphatique ou aromatique.

**9.** Procédé selon la revendication 7, dans lequel le polymère de liaison est un prépolymère de polyurée hydrosoluble et réticulable, de formule (1)

$$CP\text{-}(Q)_q \qquad (1)$$

dans laquelle q est un nombre entier ≥ 3, Q est un radical organique qui comprend au moins un groupe éthyléniquement insaturé, CP est un fragment de copolymère ramifié multivalent comprenant des segments A et U et, éventuellement, des segments B et T,
où A est un radical bivalent de formule

$$-NR_A\text{-}A_1\text{-}NR_A'\text{-} \qquad (2)$$

dans laquelle $A_1$ est le radical bivalent de $-(R_{11}-O)_n-(R_{12}-O)_m-(R_{13}-O)_p-$, un radical bivalent aliphatique en $C_2$-$C_{24}$, linéaire ou ramifié, un radical bivalent cycloaliphatique ou aliphatique-cycloaliphatique en $C_5$-$C_{24}$, ou un radical bivalent aromatique ou araliphatique en $C_6$-$C_{24}$, $R_{11}$, $R_{12}$, $R_{13}$, indépendamment les uns des autres, sont chacun un radical linéaire ou ramifié de type alkylène en $C_2$-$C_4$ ou alkylène en $C_2$-$C_8$ hydroxy-substitué, n, m et p, indépendamment les uns des autres, sont chacun un nombre de 0 à 100, à condition que la somme de (n+m+p) soit comprise entre 5 et 1000, et $R_A$ et $R_A'$, indépendamment l'un de l'autre, sont chacun un hydrogène, un alkyle en $C_1$-$C_6$ non substitué, un alkyle en $C_1$-$C_6$ substitué, ou une liaison directe formatrice de cycle ;
T est un radical bivalent de formule

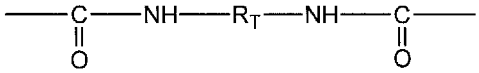
(3),

dans laquelle $R_T$ est un radical bivalent aliphatique, cycloaliphatique, aliphatique-cycloaliphatique, aromatique, araliphatique ou aliphatique-hétérocyclique.
U est un radical trivalent de formule

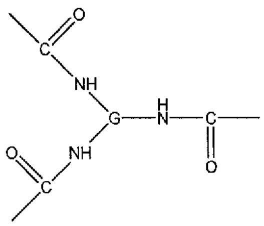
(4),

dans laquelle G est un radical trivalent aliphatique en $C_3$-$C_{24}$, linéaire ou ramifié, un radical trivalent cycloaliphatique ou aliphatique-cycloaliphatique en $C_5$-$C_{45}$, ou un radical trivalent aromatique ou araliphatique en $C_3$-$C_{24}$ ;
B est un radical de formule

$-NR_B-B_1-NR_B'-$ (5),

dans laquelle $R_B$ et $R_B'$, indépendamment l'un de l'autre, sont chacun un hydrogène, un alkyle en $C_1$-$C_6$ non substitué, un alkyle en $C_1$-$C_6$ substitué, ou une liaison directe formatrice de cycle, $B_1$ est un radical hydrocarboné bivalent aliphatique, cycloaliphatique, aliphatique-cycloaliphatique, aromatique ou araliphatique qui possède au moins un groupe amine primaire ou secondaire ou est interrompu par au moins un groupe amine $-NR_m-$ dans lequel $R_m$ est un hydrogène, un radical Q mentionné ci-dessus ou un radical de formule

Q-CP'- (6),

dans laquelle Q est tel que défini ci-dessus, et CP' est un fragment de copolymère bivalent comprenant au moins deux des segments A, B, T et U mentionnés ci-dessus ; à condition que, dans les fragments de copolymère CP et CP', un segment A ou B soit suivi d'un segment T ou U dans chaque cas ; à condition que, dans les fragments de copolymère CP et CP', un segment T ou U soit suivi d'un segment A ou B dans chaque cas ; à condition que le radical Q, dans les formules (1) et (6), soit lié à un segment A ou B dans chaque cas ; et à condition que l'atome N de $-NR_m-$soit lié à un segment T ou U lorsque $R_m$ est un radical de formule (6).

**10.** Procédé selon la revendication 1, dans lequel un revêtement transparent transférable est appliqué sur la surface de moulage du moule avant l'étape (b).

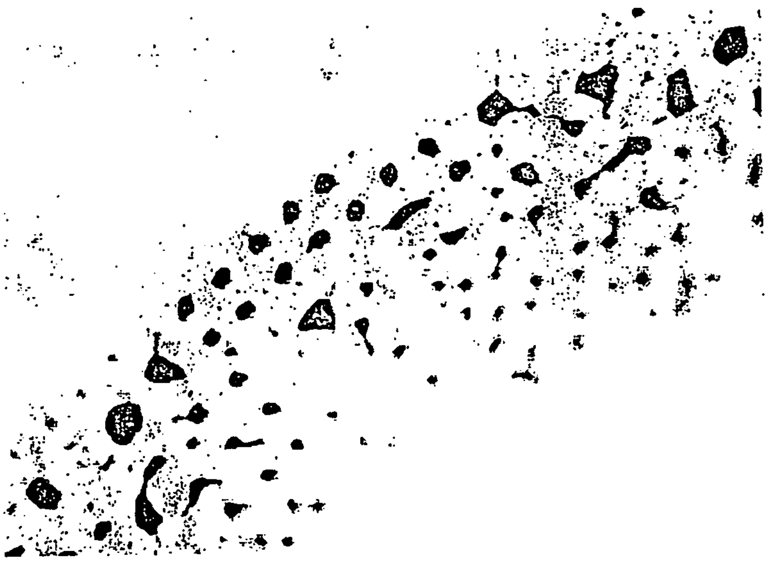

Fig. 1a

500 µm

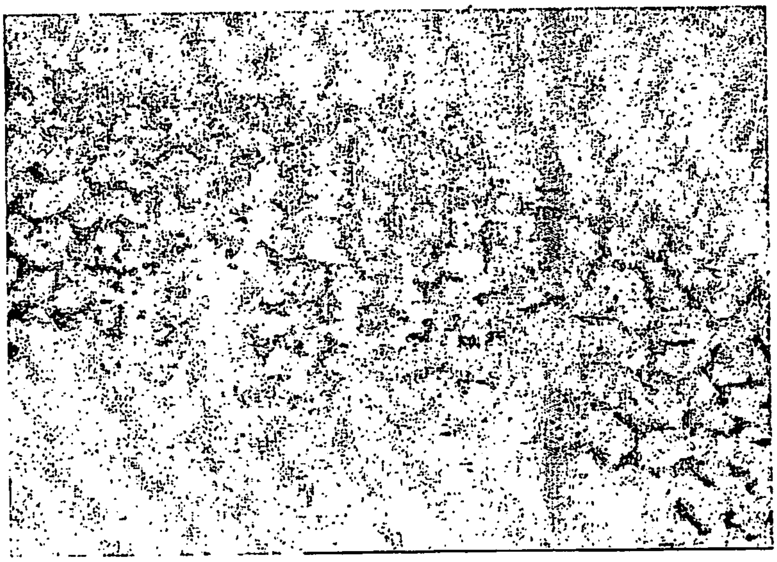

Fig. 1b

500 µm

**Figure 1**

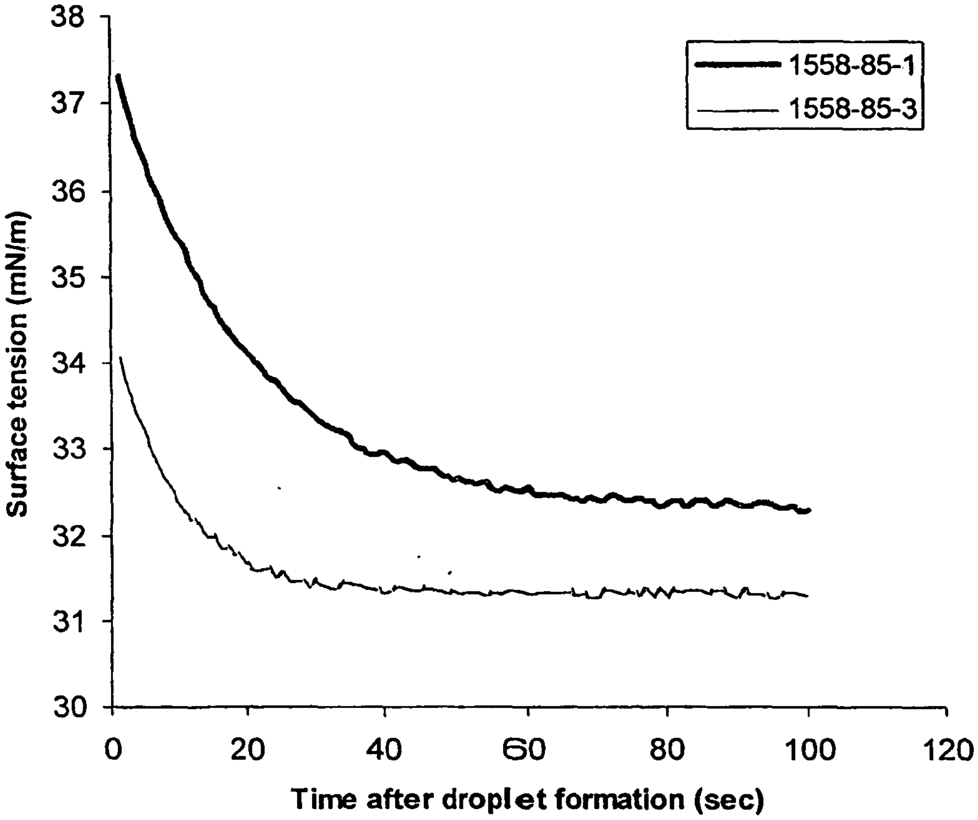

38
37
36
35
34
33
32
31
30
Surface tension (mN/m)
1558-85-1
1558-85-3
0
20
40
60
80
100
120
Time after droplet formation (sec)


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4668240 A
- US 4857072 A
- US 5272010 A
- US 5414477 A
- US 20030054109 A
- WO 2004022659 A
- US 6627124 B
- US 5583163 A
- US 6303687 B
- US 5849841 A
- US 6479587 B
- EP 0655470 A
- US 5712356 A
- EP 0712867 A
- US 5665840 A
- EP 0932635 A
- EP 0958315 A
- US 6165408 A
- EP 0961941 A
- US 6221303 B
- WO 2000031150 A
- US 5160463 A